# EUROPEAN PATENT SPECIFICATION

(11) **EP 3 494 075 B1**
(45) Date of publication and mention of the grant of the patent: **25.11.2020**
(21) Application number: 17761922.8
(22) Date of filing: 03.08.2017
(51) Int. Cl.: B65G 21/10, B65G 23/06, B65G 39/04, B65G 47/248, B65G 15/06

(54) **CONVEYOR HAVING A BELT PROVIDED WITH AT LEAST A PLURALITY OF GUIDE-SYNCHRONISING ELEMENTS**
FÖRDERANLAGE MIT EINEM BAND MIT MINDESTENS EINER VIELZAHL VON FÜHRUNGSSYNCHRONISIERENDEN ELEMENTEN
TRANSPORTEUR COMPORTANT UNE COURROIE POURVUE D'AU MOINS UNE PLURALITÉ D'ÉLÉMENTS DE SYNCHRONISATION DE GUIDAGE

(30) Priority: 05.08.2016 IT 201600082685
(43) Date of publication of application: 12.06.2019
(73) Proprietor: P.R. Rubino S.r.l., 40011 Anzola Emilia (BO) (IT)
(72) Inventor: RUBINO, Attilio, 40011 Anzola Emilia (BO) (IT)
(74) Representative: Dall'Olio, Christian
(86) International application number: PCT/IB2017/054754
(87) International publication number: WO 2018/025215

(56) References cited:
- EP-A1- 1 123 883
- FR-A1- 2 769 901
- US-A- 1 674 419
- US-B1- 7 021 457

## Description

### FIELD OF THE INVENTION

The present invention relates to the technical sector concerning conveyors; in particular the invention relates to a conveyor having a belt provided with at least a plurality of guide-synchronising elements arranged in a longitudinal direction.

### DESCRIPTION OF THE PRIOR ART

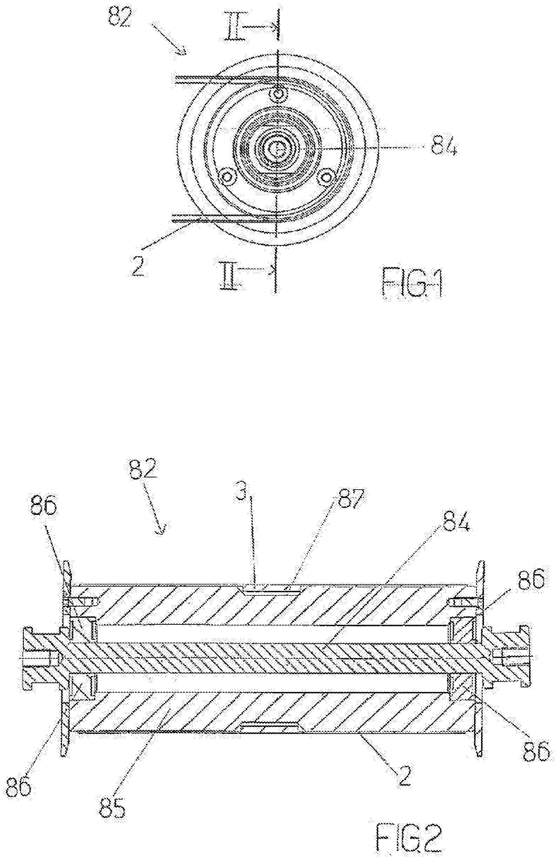

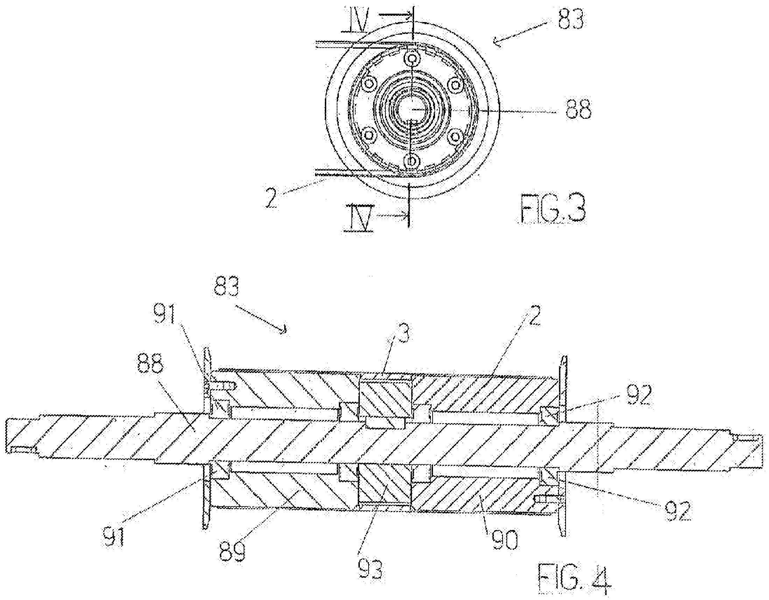

A conveyor is known having a belt provided with at least a plurality of guide-synchronising elements arranged in a longitudinal direction, which guide-synchronising elements can be teeth having a width that is smaller than the width of the belt. With reference to figures from 1 to 4, the conveyor comprises a frame (not illustrated), a driven winding group (82) (figures 1, 2) and a motorised winding group (83) (figures 3-4). The driven winding group (82) preferably comprises: a driven shaft (84) which is fixed to the frame at the relative ends; and a first pulley (85) which is rotatably coupled to the driven shaft (84) by means of first bearings (86), and which externally conforms a circular seating (87) for receiving the plurality of guide-synchronising elements (3). The motorised winding group (83) comprises: a drive shaft (88) which at an end is connected to an electric motor (not illustrated) and which at the other end is connected, by means of bearings (also not illustrated), to the frame; a second pulley (89) and a third pulley (90) which are rotatably coupled to the drive shaft (88) respectively by second bearings (91) and third bearings (92); and a fourth cogged pulley (93) which is interposed between the second pulley (89) and the third pulley (90) and is fixed to the drive shaft (88) for enmeshing with the plurality of guide-synchronising elements (3) when the belt (2) winds on the second pulley (89) and on the third pulley (90). Documents US 7021457 B1 and FR 2769901 A describe examples of such a conveyor. More especially, US 7021457 B1 discloses a conveyor according to the preamble of claim 1.

It is therefore clear that it is necessary to use a belt of a predetermined width, which depends on the axial dimensions of the pulleys of the winding groups. If the dimensions of the products to be conveyed vary to the point of requiring the use of a belt of a different width, then it is necessary to use another conveyor.

This requires having available conveyors with belts of different widths, which leads to an increase in volumes and costs.

### SUMMARY OF THE INVENTION

The aim of the invention consists in obviating this drawback.

The aim is attained by a conveyor having a belt provided with at least a plurality of guide-synchronising elements arranged in a longitudinal direction, according to claim 1.

The conveyor of the invention can advantageously be used with belts having different widths: in fact, on varying the width of the belt to be used it is sufficient to insert or remove correspondingly pulleys of the first plurality of pulleys, the first pulley and the second pulley. In particular, the first pulley and the second pulley can be replaced with other pulleys having a suitable length, or it is possible to add a further pulley flanked to the first pulley, thus forming a second plurality of pulleys, and a further pulley flanked to the second pulley, thus forming a third plurality of pulleys.

### BRIEF DESCRIPTION OF THE DRAWINGS

Specific embodiments of the invention will be described in the following part of the present description, according to what is set down in the claims and with reference to figures from 5 to 36. A brief description follows of the appended tables of drawings:
- figure 1 is a front view of a first part of a conveyor of known type, which comprises a portion of belt and a driven winding group;
- figure 2 is a view of section II-II of figure 1;
- figure 3 is a front view of a second part of the conveyor of known type, which comprises a portion of belt and a motorised winding group;
- figure 4 is a view of section IV-IV of figure 3;
- figures 5, 6 respectively illustrate a perspective and a lateral view of a conveyor with a belt provided with at least a plurality of guide-synchronising elements arranged in a longitudinal direction, object of the present invention, according to a first embodiment in which the conveyor is configured for tilting the products by one hundred and eighty degrees during conveying thereof; for simplicity of representation, the plurality of guide-synchronising elements has been omitted;
- figure 7 is the view of section VII-VII of figure 6, in larger scale, in which the plurality of guide-synchronising elements with which the belt is provided is illustrated;
- figure 8 is a view alike that of figure 5, in which the belt has been omitted better to illustrate the remaining elements of the conveyor;
- figure 8A is a larger-scale view of detail K of figure 8;
- figures 9, 10 respectively illustrate a perspective and a lateral view of a conveyor with a belt provided with at least a plurality of guide-synchronising elements arranged in a longitudinal direction, object of the present invention, according to a second embodiment in which the conveyor is configured for tilting the products by ninety degrees during conveying thereof; for simplicity of representation, the plurality of guide-synchronising elements has been omitted;
- figure 11 is the view of section XI-XI of figure 10, in larger scale, in which the plurality of guide-synchronising elements with which the belt is provided is illustrated;
- figure 12 is a view alike that of figure 9, in which the belt has been omitted better to illustrate the remaining elements of the conveyor;
- figure 13 is a front view, along direction X, of a part of the conveyor illustrated in figure 5, denoted by reference G1, which comprises a portion of belt and a first embodiment of a driven winding group;
- figure 14 is the view of section XIV-XIV of figure 13;
- figure 15 is a perspective view of driven winding group of figure 13;
- figures 16, 17, 18 are respectively alike to figures 13, 14, 15 and illustrate a second embodiment of the driven winding group;
- figures 19, 20, 21 are respectively alike to figures 13, 14, 15 and illustrate a third embodiment of the driven winding group;
- figures 22, 23, 24 are respectively alike to figures 13, 14, 15 and illustrate a fourth embodiment of the driven winding group;
- figure 25 is a front view, once more along direction X, of a further part of the conveyor illustrated in figure 5, denoted by reference G2, which comprises a further portion of belt and a first embodiment of a motorised winding group; for simplicity of illustration, the relative drive shaft is not illustrated;
- figure 26 is the view of section XXVI-XXVI of figure 25;
- figure 27 is a perspective view of motorised winding group of figure 25;
- figures 28, 29, 30 are respectively alike to figures 25, 26, 27 and illustrate a second embodiment of the motorised winding group;
- figures 31, 32, 33 are respectively alike to figures 25, 26, 27 and illustrate a third embodiment of the motorised winding group;
- figure 34 is a front view, along direction X, of another part of the conveyor illustrated in figure 5, denoted by reference G3, which comprises a support and regulating unit of the conveyor;
- figure 35 is the view of section XXXV-XXXV of figure 34, in larger scale;
- figure 36 is a perspective view of the support and regulating unit of the conveyor of figure 34.

### DESCRIPTION OF THE PREFERRED EMBODIMENTS

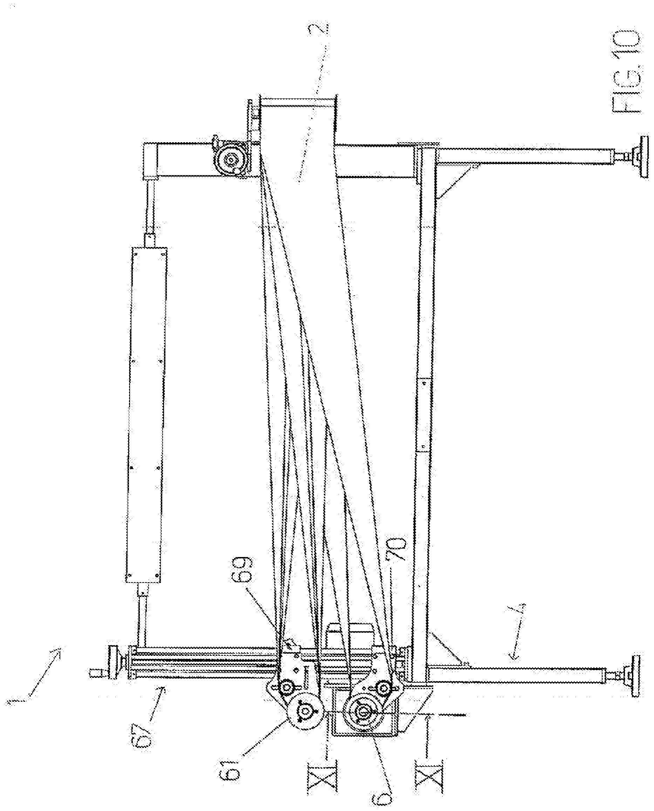

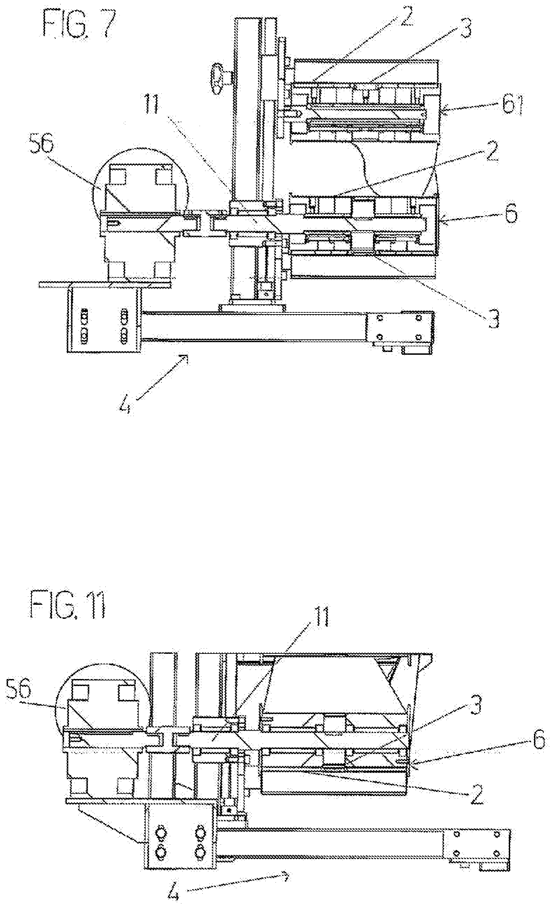

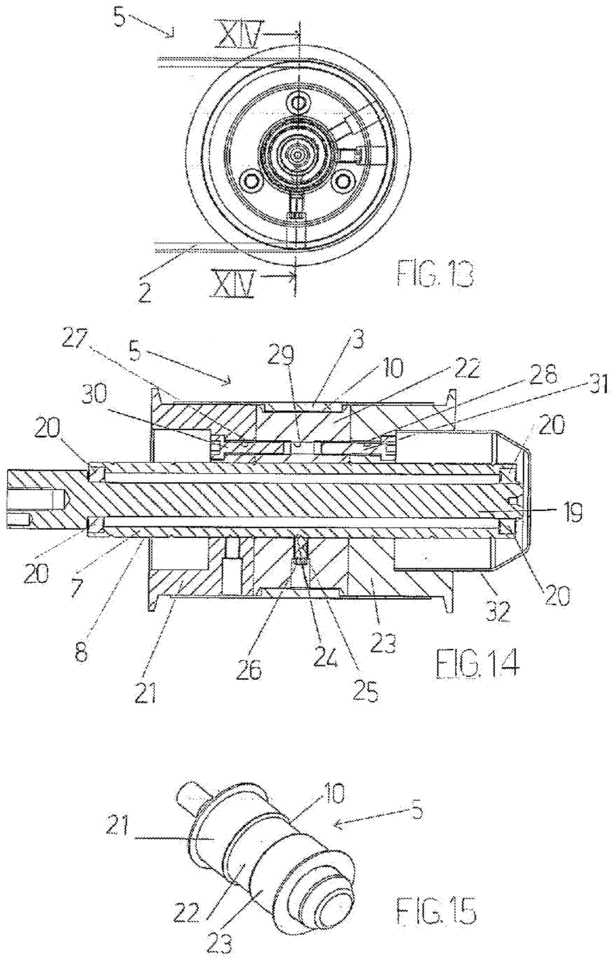

With reference to figures from 5 to 36, reference numeral (1) denotes a conveyor having a belt (2) provided with at least a plurality of guide-synchronising elements (3) arranged in a longitudinal direction, object of the present invention. The conveyor (1) comprises: a frame (4); a first driven winding group (5) and a motorised winding group (6). The first driven winding group (5) comprises: a first pulleys support (7) which is borne by the frame (4), which is rotatable relative to the frame (4) and which comprises a first cylindrical lateral surface (8); a first plurality of pulleys (9) which are dimensioned for inserting along the first cylindrical lateral surface (8) of the first pulleys support (7) and which are fixable to the first pulleys support (7); the first plurality of pulleys (9) conforming at least a first circular seating (10) for receiving the at least a plurality of guide-synchronising elements (3) when the belt (2) winds on the first plurality of pulleys (9) (figures 13-24). The motorised winding group (6) comprises: a drive shaft (11) (see figures 7-11); at least a cogged pulley (12) which is fixed to the drive shaft (11) so as to enmesh with the at least a plurality of guide-synchronising elements (3); a second pulleys support (13) which has a tubular shape, which is inserted along the drive shaft (11), which is rotatable with respect to the drive shaft (11) and which comprises a second cylindrical lateral surface (14); a third pulleys support (15) which has a tubular shape, which is inserted along the drive shaft (11), which is rotatable with respect to the drive shaft (11) and which comprises a third cylindrical lateral surface (16); at least a first pulley (39) which is dimensioned so as to insert along the second cylindrical lateral surface (14) of the second pulleys support (13) and which is fixable to the second pulleys support (13); at least a second pulley (40) which is dimensioned so as to insert along the third cylindrical lateral surface (16) of the third pulleys support (15) and which is fixable to the third pulleys support (15). The second pulleys support (13) and the third pulleys support (15) being opposite with respect to the cogged pulley (12). At least a part of the pulleys of the first plurality of pulleys (9), the at least a first pulley (39) and the at least a second pulley (40) are insertable and removable along and from, respectively, the first cylindrical lateral surface (8), the second cylindrical lateral surface (14) and the third cylindrical lateral surface (16) as a function of the transversal dimensions of the belt (2).

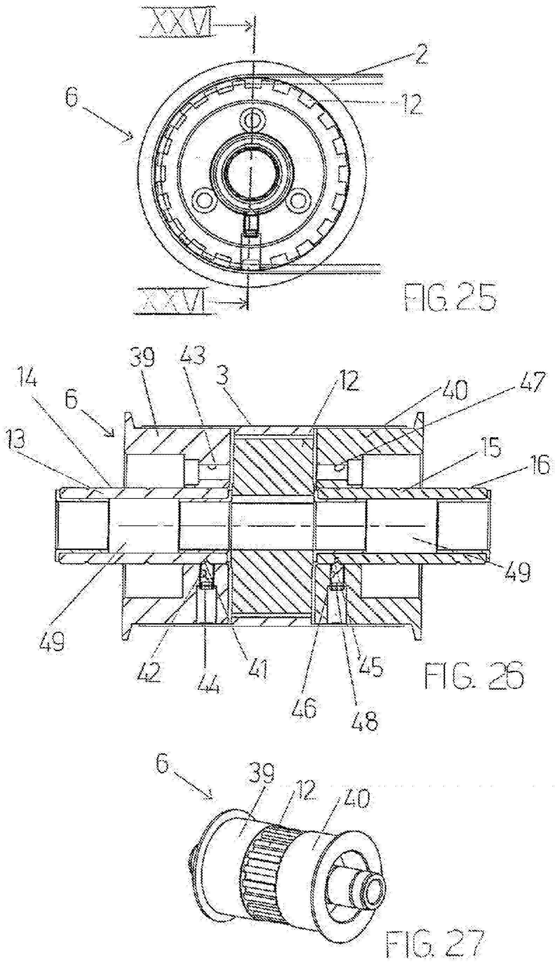

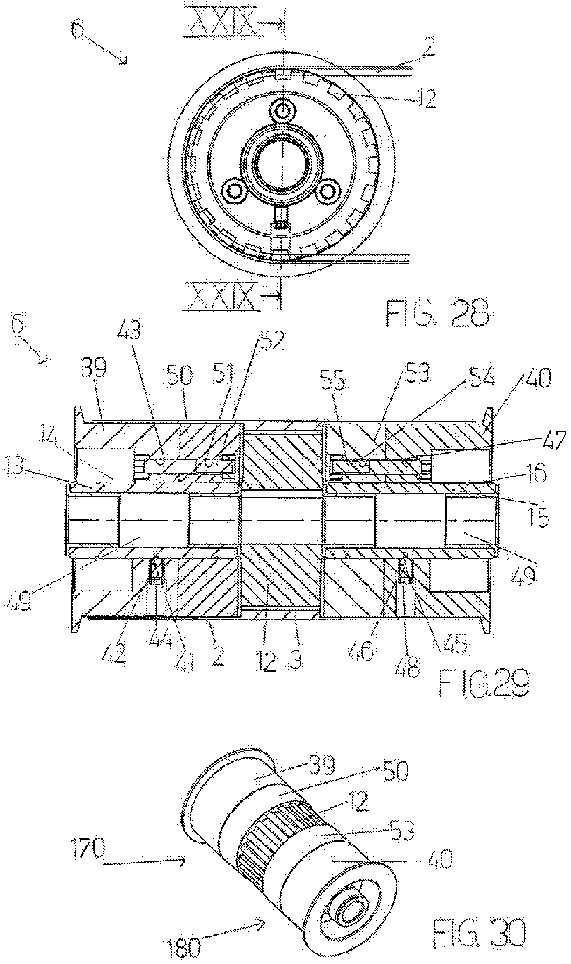

The first pulley (39) and the second pulley (40) can be replaced by other corresponding pulleys having a width, i.e. an axial extension, that is suitable for the width of the belt (2) which is to be used. See figures 25-27. Alternatively, the conveyor (1) can comprise a second plurality of pulleys (170) of which the at least a first pulley (39) is an integral part, and a third plurality of pulleys (180) of which the at least a second pulley (40) is an integral part. See figures 28-33.

The first driven winding group (5) preferably comprises a first driven shaft (19) which is fixed to the frame (4); in this case the first pulleys support (7) is rotatably coupled to the first driven shaft (19), for example by means of ball or roller bearings (20), see figures 14, 17, 20, 23.

The motorised winding group (6) is preferably arranged projectingly. In other words, the drive shaft (11) is arranged projectingly, thus having a free end.

The first driven winding group (5) is preferably arranged projectingly. In other words, the first driven shaft (19) is arranged projectingly, thus having a free end.

The projecting arrangement of the motorised winding group (6) and/or of the first driven winding group (5) advantageously simplifies the insertion and de-insertion of the corresponding pulleys of the first plurality of pulleys (9), of the at least a first pulley (39) and of the at least a second pulley (40).

The projecting arrangement of these groups is made possible by the use of a belt (2) provided with at least a plurality of guide-synchronising elements (3) arranged in a longitudinal direction, for the following reasons. In order to arrange the motorised winding group (6) and the first driven winding group (5) projectingly it is necessary to reduce the tensioning of the belt (2): in a belt without the plurality of guide-synchronising elements this might cause lateral displacements of the belt during the functioning of the conveyor, causing malfunctioning. Instead, by using a belt (2) provided with the plurality of guide-synchronising elements (3) the above drawback will not occur due to the fact that the belt (2) is maintained in position by the guide-synchronising elements (3) which engage in the first circular seating (10) and with the cogged pulley (12).

In the following reference is made to the first embodiment of the first driven winding group conducted (5), illustrated in figures 13, 14, 15. The first plurality of pulleys (9) comprises a third pulley (21), a fourth pulley (22) and a fifth pulley (23); the fourth pulley (22) is interposed between the third pulley (21) and the fifth pulley (23) and forms the first circular seating (10). The first pulleys support (7) can comprise a first blind hole (24) which is fashioned on the relative first cylindrical lateral surface (8); the fourth pulley (22) can comprise a first through-hole (25) which is perpendicular to the relative axis and which is provided with a threaded portion; the fourth pulley (22) can thus be fixed to the first pulleys support (7) by means of a first grub screw (26) that screws into the threaded portion of the first through-hole (25) of the fourth pulley (22) and which engages in the first blind hole (24) of the first pulleys support (7). The third pulley (21) can be provided with a second through-hole (27) parallel to the axis of the third pulley (21); the fifth pulley (23) can be provided with a third through-hole (28) parallel to the axis of the fifth pulley (23); the fourth pulley (22) can be provided with a fourth through-hole (29) parallel to the axis of the fourth pulley (22); the second through-hole (27), the third through-hole (28) and the fourth through-hole (29) respectively of the third pulley (21), of the fifth pulley (23) and of the fourth pulley (22) can be arranged in such a way as to enable the fixing of the third pulley (21) to the fourth pulley (22) by means of a first screw (30) and the fixing of the fifth pulley (23) to the fourth pulley (22) by means of a second screw (31). The first driven winding group (5) can comprise a covering (32) for covering the free end of the first driven shaft (19); the covering (32) can be removably fixed to the fifth pulley (23).

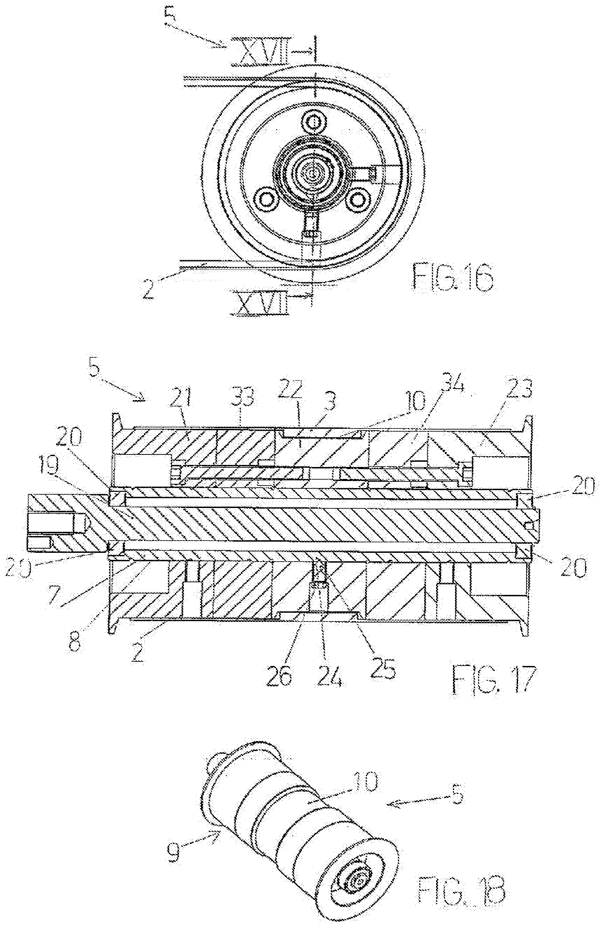

The second embodiment of the first driven winding group (5), illustrated in figures 16, 17, 18 is differentiated from the first embodiment owing to the fact that the first plurality of pulleys (9) further comprises a sixth pulley (33), which is interposed between the third pulley (21) and the fourth pulley (22) and a seventh pulley (34), which is interposed between the fourth pulley (22) and the fifth pulley (23). The number of pulleys increases due to the fact that the belt (2) in this case has a greater width; alternatively to the use of five pulleys, it would have been possible to replace the third pulley (21), the fourth pulley (22) and the fifth pulley (23) with a same number of wider pulleys.

To pass from the first embodiment of the first driven winding group (5) to the second embodiment of the first driven winding group (5), it is possible to proceed as follows: remove the covering (32); loosen the first screw (30), the second screw (31) and the first grub screw (26); de-insert the third pulley (21), the fourth pulley (22) and the fifth pulley (23) from the first cylindrical lateral surface (8) of the first pulleys support (7); insert respectively the third pulley (21), the sixth pulley (33), the fourth pulley (22), the seventh pulley (34) and the fifth pulley (23) from the part of the free end of the first driven shaft (19); apply the first grub screw (26) for fixing the fourth pulley (22) to the first pulleys support (7); apply the first screw (30) for fixing the third pulley (21) and the sixth pulley (33) to the fourth pulley (22); apply the second screw (31) for fixing the seventh pulley (34) and the fifth pulley (23) to the fourth pulley (22); newly apply the covering (32). The inserting and de-inserting of the pulleys of the first plurality of pulleys (9) is therefore rapid and simple.

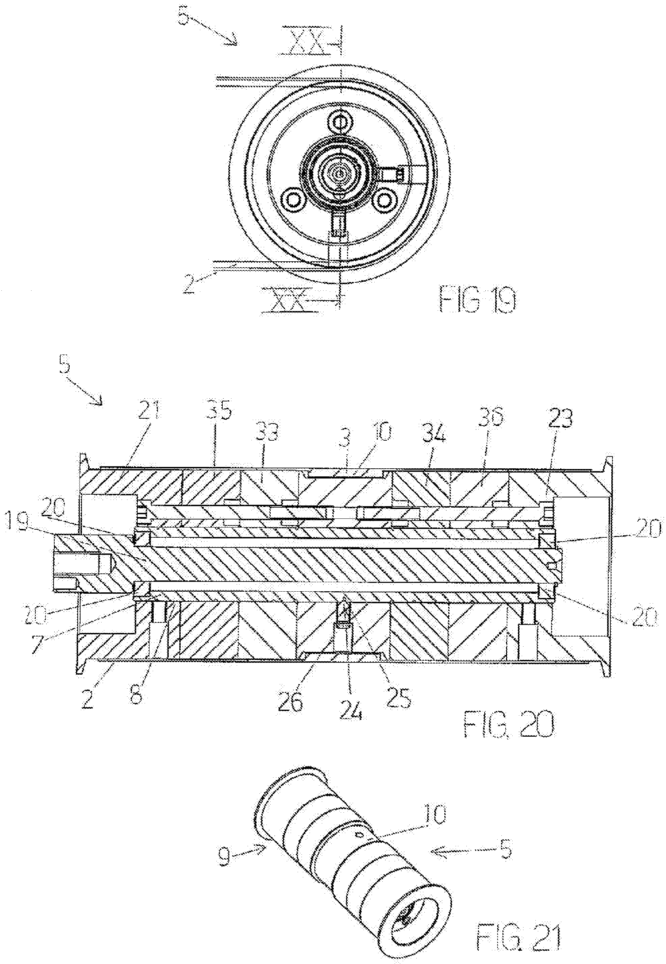

The third embodiment of the first driven winding group (5), illustrated in figures 19, 20, 21 is differentiated from the relative second embodiment owing to the fact that the first plurality of pulleys (9) further comprises an eighth pulley (35), which is interposed between the third pulley (21) and the sixth pulley (33) and a ninth pulley (36), which is interposed between the seventh pulley (34) and the fifth pulley (23). Once more the number of pulleys increases due to the fact that the belt (2) is still wider.

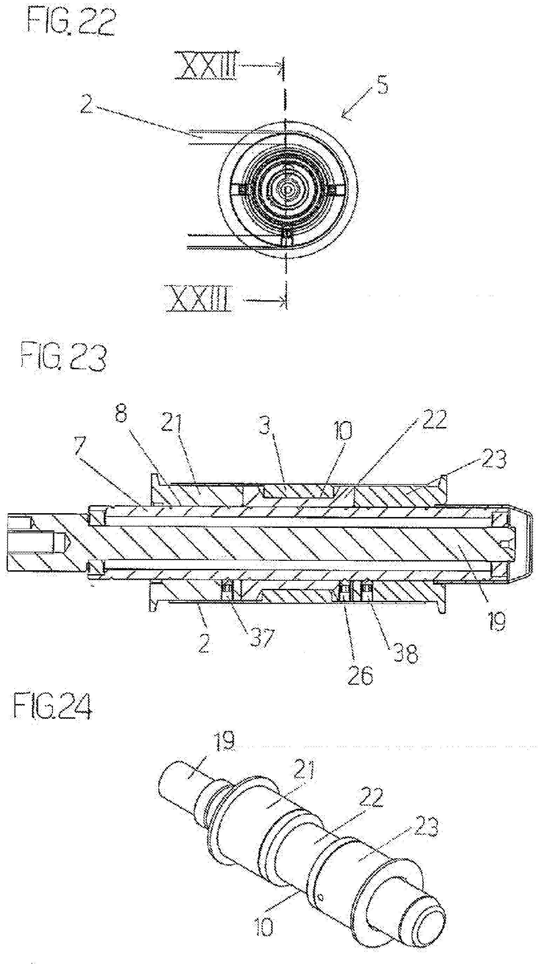

The fourth embodiment of the first driven winding group (5), illustrated in figures 22, 23, 24 is differentiated from the first embodiment in terms of dimensions of the pulleys and due to the fact that the third pulley (21) and the fifth pulley (23) are fixed to the first pulleys support (7) by means of a corresponding second grub screw (37) and a third grub screw (38), in a like way to how the fourth pulley (22) is fixed to the first pulleys support (7), as already specified in the foregoing.

In the following reference is made to the first embodiment of the first motorised winding group (6), illustrated in figures 25, 26, 27. The first pulley (39) is inserted along the second cylindrical lateral surface (14) of the second pulleys support (13) and is fixed thereto. The second pulley (40) is inserted along the third cylindrical lateral surface (16) of the third pulleys support (15) and is fixed thereto. The second pulleys support (13) can comprise a second blind hole (41) which is fashioned on the relative second cylindrical lateral surface (14); the first pulley (39) can comprise a fifth through-hole (42) which is perpendicular to the relative axis and which is provided with a threaded portion, and a sixth through-hole (43) which is parallel to the relative axis; the first pulley (39) can thus be fixed to the second pulleys support (13) by means of a fourth grub screw (44) that screws into the threaded portion of the fifth through-hole (42) of the first pulley (39) and which engages in the second blind hole (41) of the second pulleys support (13). The third pulleys support (15) can comprise a third blind hole (45) which is fashioned on the relative third cylindrical lateral surface (16); the second pulley (40) can comprise a seventh through-hole (46) which is perpendicular to the relative axis and which is provided with a threaded portion, and an eighth through-hole (47) that is parallel to the relative axis; the second pulley (40) can thus be fixed to the third pulleys support (15) by means of a fifth grub screw (48) that screws into the threaded portion of the seventh through-hole (46) of the second pulley (40) and which engages in the third blind hole (45) of the third pulleys support (15). In the example illustrated in figures 25-27, the second pulleys support (13) and the third pulleys support (15) couple rotatably to the drive shaft (11) via corresponding self-lubricating bushings (49); alternatively, the rotatable coupling might be obtained by means of bearings or other suitable means, known to the technical expert in the sector and not illustrated.

The second embodiment of the first motorised winding group (6), illustrated in figures 28-30, is differentiated from the first embodiment owing to the fact that: the second plurality of pulleys (170) which as well as the first pulley (39) also comprises a tenth pulley (50), which is interposed between the first pulley (39) and the cogged pulley (12) and which is provided with a ninth through-hole (51) parallel to the relative axis; a third screw (52) is included which engages in the sixth through-hole (43) of the first pulley (39) and in the ninth through-hole (51) of the tenth pulley (50) for solidly constraining the first pulley (39) and the tenth pulley (50) to one another; a third plurality of pulleys (180) is included which as well as the second pulley (40) also comprises an eleventh pulley (53), which is interposed between the cogged pulley (12) and the second pulley (40) and which is provided with a tenth through-hole (54) parallel to the relative axis; a fourth screw (55) is included which engages in the eighth through-hole (47) of the second pulley (40) and in the tenth through-hole (54) of the eleventh pulley (53) for solidly constraining the second pulley (40) and the eleventh pulley (53) to one another. As already specified with reference to an embodiment of the first driven winding group (5), the number of pulleys increases due to the fact that the belt (2) has in this case a greater width; alternatively to the use of a greater number of pulleys, it would have been possible to replace the first pulley (39) and the second pulley (40) with a same number of wider pulleys.

To pass from the first embodiment of the motorised winding group (6) to the second embodiment of the motorised winding group (6), it is possible to proceed as follows: disconnecting the drive shaft (11) from the electric motor (56); loosening the fourth grub screw (44) and the fifth grub screw (48) which fix the first pulley (39) and the second pulley (40) respectively to the second pulleys support (13) and the third pulleys support (15); de-inserting the first pulley (39) from the second cylindrical lateral surface (14) of the second pulleys support (13) and the second pulley (40) from the third cylindrical lateral surface (16) of the third pulleys support (15); inserting respectively the tenth pulley (50) and the first pulley (39) along the second cylindrical lateral surface (14) of the second pulleys support (13) from the part of the end of the drive shaft (11) to which the electric motor (56) was previously connected; applying the third screw (52) for fixing the first pulley (39) and the tenth pulley (50) to one another; applying the fourth grub screw (44) for fixing the first pulley (39) to the second pulleys support (13); inserting respectively the eleventh pulley (53) and the second pulley (40) along the third cylindrical lateral surface (16) of the third pulleys support (15) from the part of the end of the drive shaft (11) to which the electric motor (56) was not previously connected; applying the fourth screw (55) for fixing the second pulley (40) and the eleventh pulley (53) to one another; applying the fifth grub screw (48) for fixing the second pulley (40) to the third pulleys support (15). In this case too, the inserting and de-inserting of the pulleys of the second plurality of pulleys (170) and the third plurality of pulleys (180) is therefore rapid and simple.

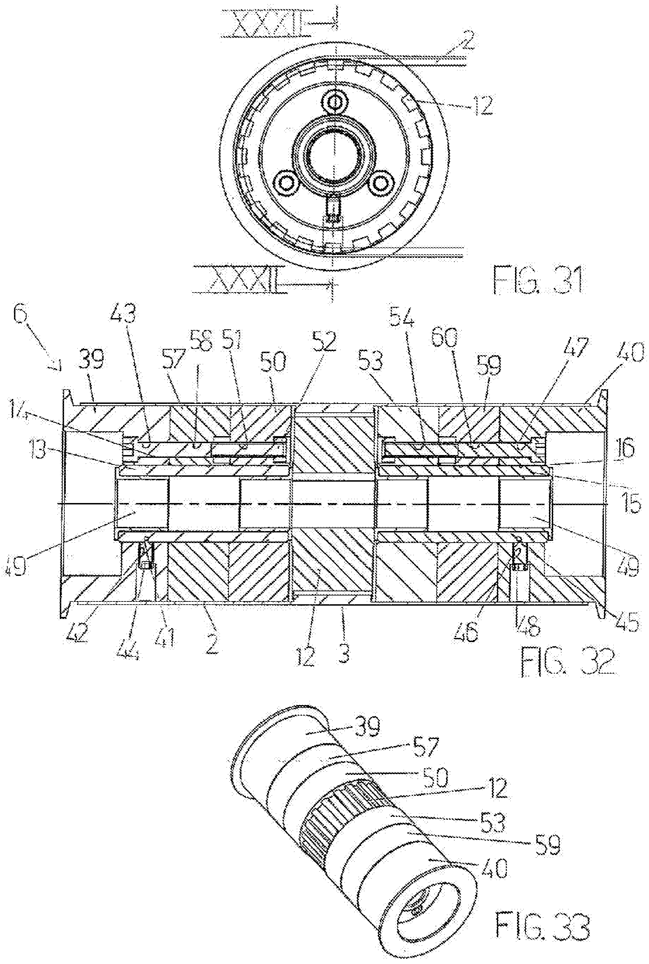

The third embodiment of the motorised winding group (6), illustrated in figures 31-33, is differentiated from the second embodiment owing to the fact that: the second plurality of pulleys (170) further comprises a twelfth pulley (57) which is interposed between the first pulley (39) and the tenth pulley (50) and which is provided with an eleventh through-hole (58); and a thirteenth pulley (59) which is interposed between the second pulley (40) and the eleventh pulley (53) and which is provided with a twelfth through-hole (60). In this case the third screw (52) will be longer so as to engage in the sixth through-hole (43) of the first pulley (39), the eleventh through-hole (58) of the twelfth pulley (57) and the ninth through-hole (51) of the tenth pulley (50) and thus solidly constrain the first pulley (39), the twelfth pulley (57) and the tenth pulley (50) to one another. The fourth screw (55) will also be longer so as to engage in the eighth through-hole (47) of the second pulley (40), the twelfth through-hole (60) of the thirteenth pulley (59) and the tenth through-hole (54) of the eleventh pulley (53) and thus solidly constrain the second pulley (40), the thirteenth pulley (59) and the eleventh pulley (53) to one another.

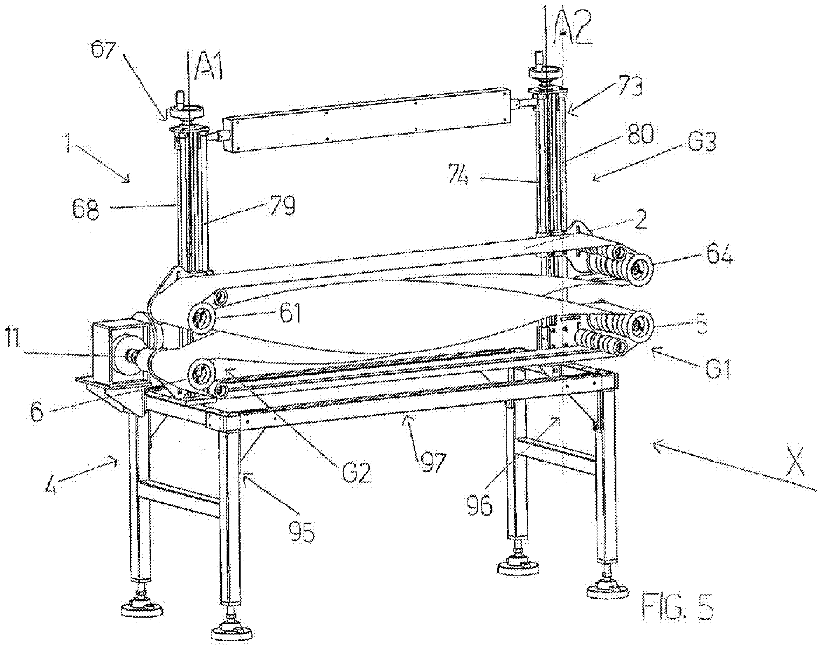

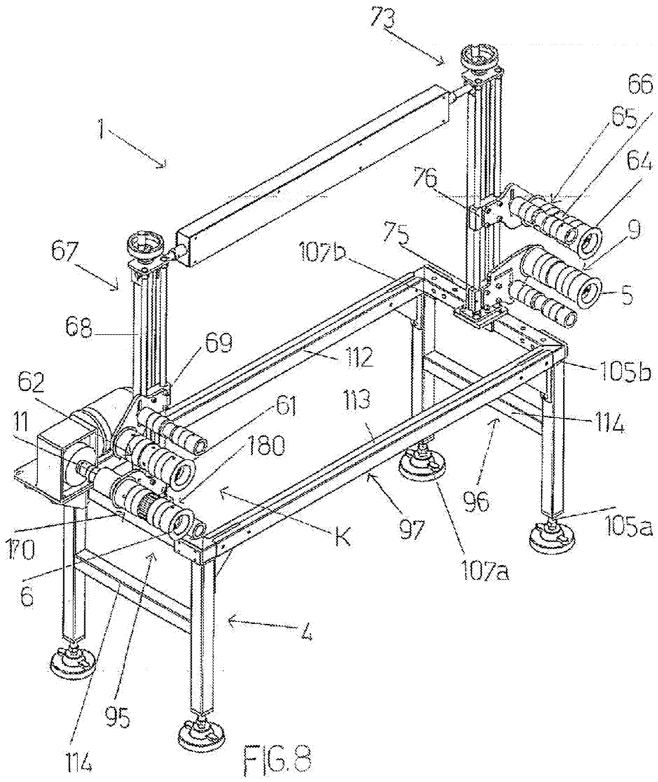

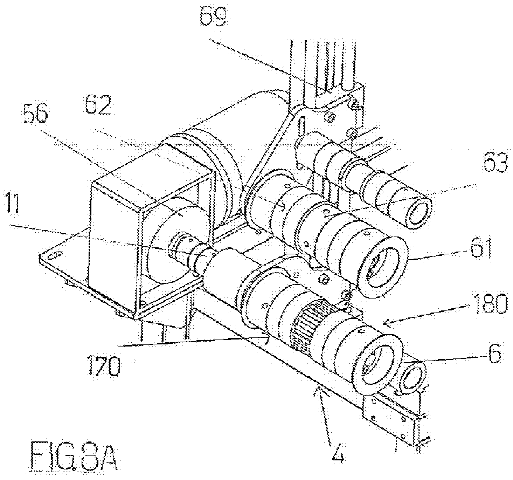

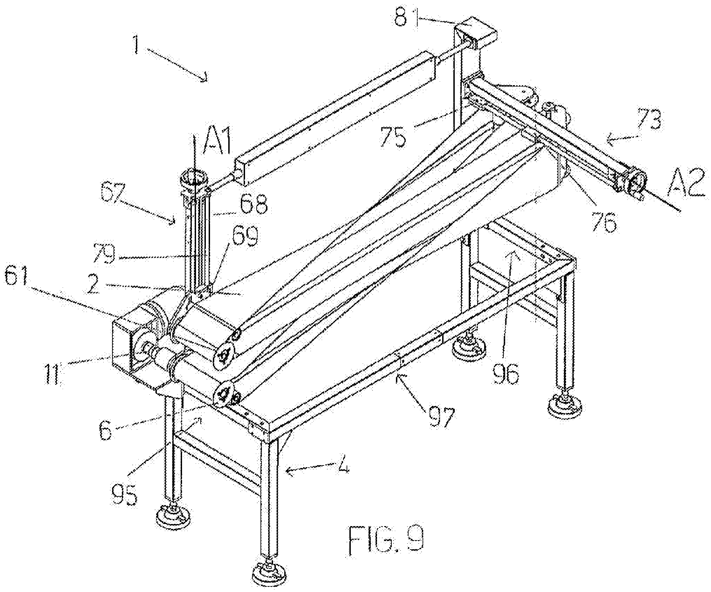

The conveyor (1) preferably also comprises (figure 8A): a second driven winding group (61) comprising in turn: a fourth pulleys support borne by the frame (4), which is rotatable with respect to the frame (4) and which comprises a fourth cylindrical lateral surface; a fourth plurality of pulleys (62) which are dimensioned for inserting along the fourth cylindrical lateral surface of the fourth pulleys support and which are fixable to the fourth pulleys support; the fourth plurality of pulleys (62) conforming at least a second circular seating (63) for receiving the at least a plurality of guide-synchronising elements (3) when the belt (2) winds on the fourth plurality of pulleys (62); a third driven winding group (64) comprising in turn: a fifth pulleys support borne by the frame (4), which is rotatable with respect to the frame (4) and which comprises a fifth cylindrical lateral surface; a fifth plurality of pulleys (65) which are dimensioned for inserting along the fifth cylindrical lateral surface of the fifth pulleys support and which are fixable to the fifth pulleys support; the fifth plurality of pulleys (65) conforming at least a third circular seating (66) for receiving the at least a plurality of guide-synchronising elements (3) when the belt (2) winds on the fifth plurality of pulleys (65); the belt (2) being wound on the first driven winding group (5), on the second driven winding group (61), on the third driven winding group (64) and on the motorised winding group (6) so as to convey the products while rotating them by a predetermined angle. For example, the products can be rotated by one hundred and eighty degrees, figure 5, or by ninety degrees, figure 9. A like conveyor (1) is also known as a "tilting conveyor".

The second driven winding group (61) preferably comprises a second driven shaft fixed to the frame (4); in this case, the fourth pulleys support is rotatably coupled to the second driven shaft.

The second driven winding group (61) is preferably arranged projectingly. In other words, the second driven shaft is arranged projectingly, thus having a free end.

The third driven winding group (64) preferably comprises a third driven shaft fixed to the frame (4); in this case the fifth pulleys support is rotatably coupled to the third driven shaft.

The third driven winding group (64) is preferably arranged projectingly. In other words, the third driven shaft is arranged projectingly, thus having a free end.

The second driven winding group (61) and the third driven winding group (64) are preferably substantially identical to the first driven winding group (5). In other words: the fourth pulleys support and the fifth pulleys support can be substantially identical to the first pulleys support (7); the fourth cylindrical lateral surface and the fifth cylindrical lateral surface can be substantially identical to the first cylindrical lateral surface (8); the fourth plurality of pulleys (62) and the fifth plurality of pulleys (65) can be substantially identical to the first plurality of pulleys (9); lastly, the second circular seating (63) and the third circular seating (66) can be substantially identical to the first circular seating (10). For this reason, in relation to the second driven winding group (61) and the third driven winding group (64) reference can be made to figures 13-24 which illustrate the first driven winding group (5).

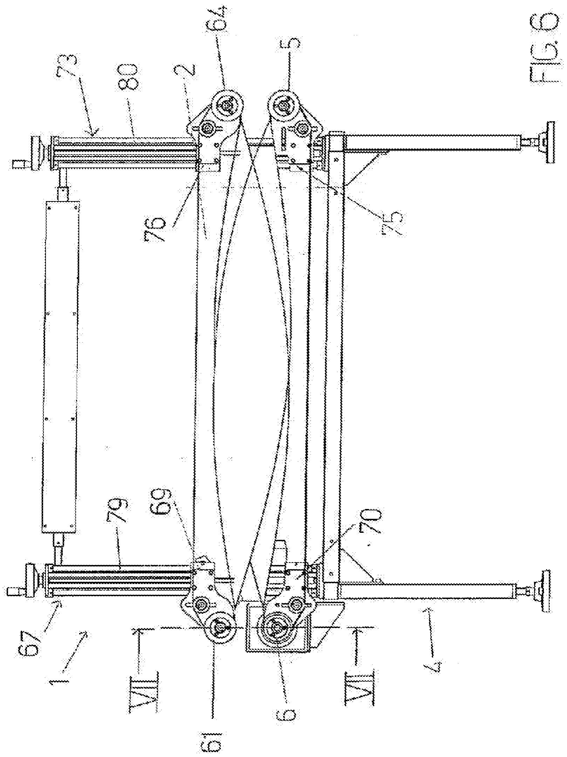

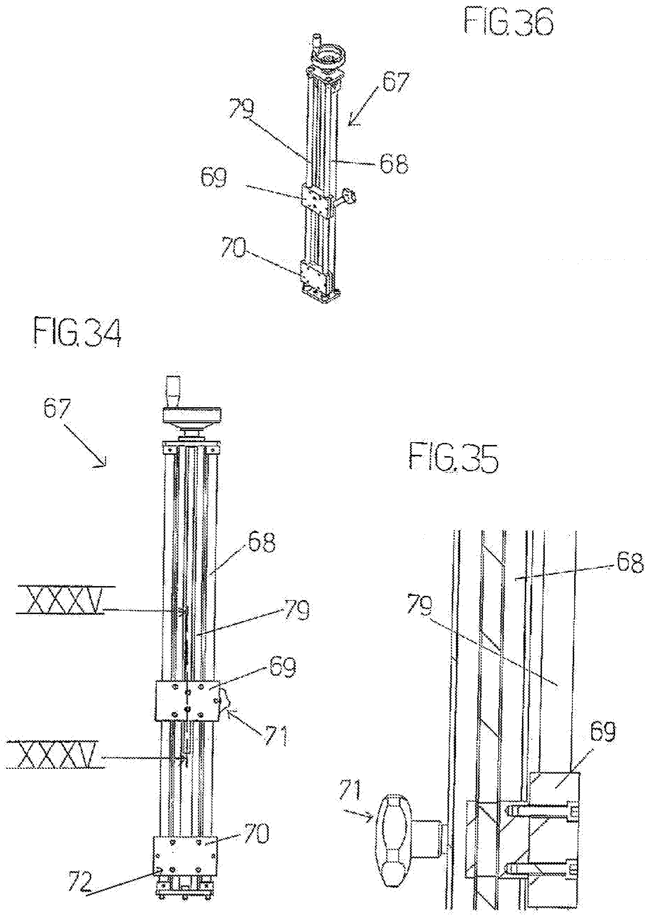

The conveyor (1) preferably comprises: a first support and regulating unit (67), (figures 5, 6, 8, 9, 34-36) in turn comprising: a first winding groups support (68) which is fixed to the frame (4); a first carriage (69) that can slide vertically along the first winding groups support (68) and which bears the second driven winding group (61); a second carriage (70) that can slide vertically along the first winding groups support (68) and which bears the motorised winding group (6); first fixing means (71) for removably fixing the first carriage (69) to the first winding groups support (68) at a first position; second fixing means (72) for removably fixing the second carriage (70) to the first winding groups support (68) at a second position; the first support and regulating unit (67) being suitable for supporting the second driven winding group (61) and the motorised winding group (6), for regulating the position of the second driven winding group (61) along the first winding groups support (68) and for regulating the position of the motorised winding group (6) along the first winding groups support (68); a second support and regulating unit (73) (figures 5, 6, 8, 9), in turn comprising: a second winding groups support (74) which is fixed to the frame (4); a third carriage (75) that can slide vertically along the second winding groups support (74) and which bears the first driven winding group (5); and a fourth carriage (76) that can slide vertically along the second winding groups support (74) and which bears the third driven winding group (64); third fixing means (not illustrated) for removably fixing the third carriage (75) to the second winding groups support (74) at a third position; fourth fixing means (not illustrated) for removably fixing the fourth carriage (76) to the second winding groups support (74) at a fourth position; the second support and regulating unit (73) being suitable for supporting the first driven winding group (5) and the third driven winding group (64), for regulating the position of the first driven winding group (5) along the second winding groups support (74) and for regulating the position of the third driven winding group (64) along the second winding groups support (74).

With the possibility of regulating the position of the first driven winding group (5), the second driven winding group (61), the third driven winding group (64) and the motorised winding group (6), the conveyor (1) of the present invention can be used internally of a production line in which the products in inlet to the conveyor (1) can reach a certain height within a first range of heights and in which the products in outlet from the conveyor (1) must be released at a certain height within a second range of heights. This makes the conveyor (1) easily adaptable to the production line in which it is inserted, where the station arranged upstream of the conveyor (1) releases the products, for example at a fixed height, which cannot be varied, and the station downstream of the conveyor (1) receives the products for example at a fixed height, which cannot be varied.

The conveyor (1) preferably comprises: a first rail (79) which is fixed to the first winding groups support (68) and a second rail (80) which is fixed to the second winding groups support (74); wherein the first carriage (69) is slidably coupled to the first rail (79), the second carriage (70) is slidably coupled to the first rail (79), the third carriage (75) is slidably coupled to the second rail (80) and the fourth carriage (76) is slidably coupled to the second rail (80).

The second support and regulating unit (73) is preferably substantially identical to the first support and regulating unit (67). In other words: the first winding groups support (74) can be substantially equal to the first winding groups support (68); the third carriage (75) can be substantially identical to the first carriage (69); the fourth carriage (76) can be substantially identical to the second carriage (70); the third fastening means (77) can be substantially identical to the first fastening means (71); the fourth fastening means (78) can be substantially identical to the second fastening means (72).

In a first embodiment (figures 5-8) of the conveyor (1): the first winding groups support (68) develops longitudinally along a first axis (A1); the first carriage (69) and the second carriage (70) are slidable parallel to the first axis (A1) (see figure 5); the second winding groups support (74) develops longitudinally along a second axis (A2); the third carriage (75) and the fourth carriage (76) are slidable parallel to the second axis (A2) (see figure 5); the first winding groups support (68) and the second winding groups support (74) are vertically orientated; and the belt (2) is wound on the first driven winding group (5), on the second driven winding group (61), on the third driven winding group (64) and on the motorised winding group (6) so as to convey the products while orientating them by an angle that is substantially one hundred and eighty degrees. Therefore the first axis and the second axis are parallel and vertical.

In a second embodiment (figures 9-12) of the conveyor (1): the first winding groups support (68) develops longitudinally along a first axis (A1); the first carriage (69) and the second carriage (70) are slidable parallel to the first axis (A1) (see figure 9); the second winding groups support (74) develops longitudinally along a second axis (A2); the third carriage (75) and the fourth carriage (76) are slidable parallel to the second axis (A2) (see figure 9); the first winding groups support (68) is vertically orientated; the conveyor (1) comprises a first upright (81) which is removably fixed to the frame (4); the second winding groups support (74) is borne by the first upright (81) in such a way as to be horizontally orientated; and the belt (2) is wound on the first driven winding group (5), on the second driven winding group (61), on the third driven winding group (64) and on the motorised winding group (6) so as to convey the products while orientating them by an angle that is substantially ninety degrees. Therefore the first axis and the second axis are parallel and vertical.

In other words, the mounting and demounting to and from the frame (4) of the first upright (81) enables easily predisposing the conveyor (1) for conveying the products, orientating them respectively by an angle substantially of ninety degrees and one hundred and eighty degrees. This is advantageous as it is not necessary either to modify or replace the first driven winding group (5), the second driven winding group (61) and the third driven winding group (64) and the motorised winding group (6).

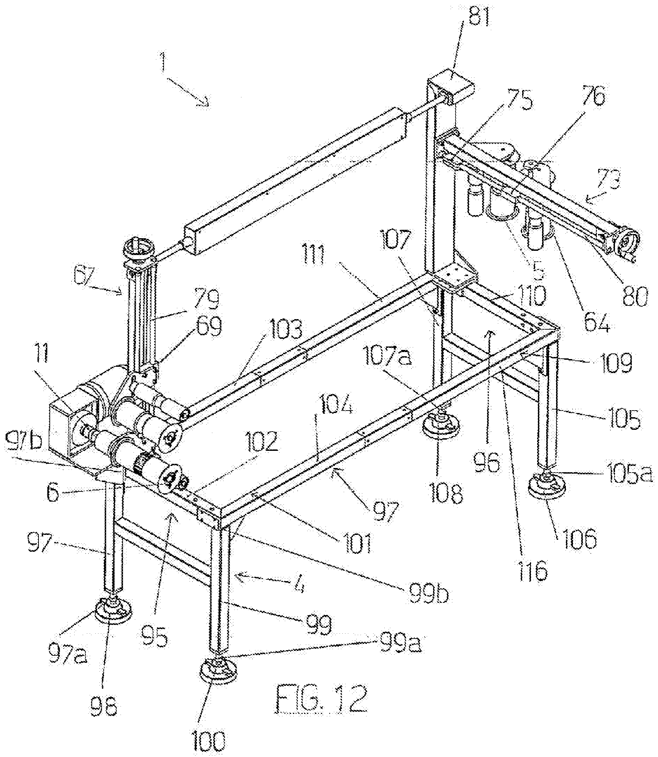

The frame (4) is preferably configured in such a way that the first winding groups support (68), the first driven winding group (5) and the motorised winding group (6), on one side, and the second winding groups support (74), the second driven winding group (61), and the third driven winding group (64), on the other side, can be reciprocally neared or distanced. On this detail (see figures 8, 12), the frame (4) can comprise: a first assembly (95) comprising elements solidly constrained to one another, which first assembly (95) bears the first winding groups support (68), the second driven winding group (61) and the motorised winding group (6); a second assembly (96) comprising elements solidly constrained to one another, which second assembly (96) bears the second winding groups support (74), the first driven winding group (5) and the third driven winding group (64); and one or more connecting elements (97) which enables mutually nearing or distancing the first assembly and the second assembly and therefore the first winding groups support (68), the first driven winding group (61) and the motorised winding group (6), on one side, and the second winding groups support (74), the first driven winding group (5) and the third driven winding group (64), on the other side.

The first assembly (95) can comprise: a second upright (97) of the frame (4); a first foot (98) of the frame (4) which is connected to a first end (97a) of the second upright (97) of the frame (4); a third upright (99) of the frame (4); a second foot (100) of the frame (4) which is connected to a first end (99a) of the third upright (99) of the frame (4); a first C-shaped element (101). The first C-shaped element (101) in turn comprises: a first central arm (102), to which are connected a second end (97b) of the second upright (97), which is opposite the relative first end (97a) of the second upright (97), and a second end (99b) of the third upright (99), which is opposite the first end (99a) of the third upright (99); a second arm (103) which is connected to a first end of the first central arm (102), and a third arm (104) which is connected to a second end of the first central arm (102) which is opposite the relative first end of the first central arm (102).

The second assembly (96) can comprise: a fourth upright (105) of the frame (4); a third foot of the frame (106) which is connected to a first end (105a) of the fourth upright (105) of the frame (4); a fifth upright (107) of the frame (4); a fourth foot (108) of the frame (4) which is connected to a first end (107a) of the fifth upright (107) of the frame (4); a second C-shaped element (109). The second C-shaped element (109) in turn comprises: a fourth central arm (110), to which are connected a second end (105b) of the fourth upright (105), which is opposite the relative first end (105a) of the fourth upright (105), and a second end (107b) of the fifth upright (107), which is opposite the relative first end (107a) of the fifth upright (107); a fifth arm (111) which is connected to a first end of the fourth central arm (110), and a sixth arm (116) which is connected to a second end of the fourth central arm (110) which is opposite the relative first end of the fourth central arm (110).

A first connecting element (112) and a second connecting element (113) are preferably included, which can have a longitudinal extension and a tubular section that can be either L-shaped or C-shaped. The first connecting element (112) can be removably fixed to the free ends of the second arm (103) and the fifth arm (111), while the second connecting element (113) can be removably fixed to the free ends of the third arm (104) and the sixth arm (116).

In particular, during a regulating step, the first connecting element (112) can slide along the second arm (103) and along the fifth arm (111) and the second connecting element (113) can slide along the third arm (104) and along the sixth arm (116): in this way it is possible to regulate the relative distance between the first assembly (95) and the second assembly (96), as already specified in the foregoing.

Further, the frame (4) can also comprise a seventh arm (114) the ends of which are fixed respectively to the second upright (97) and the third upright (99), and an eighth arm (115) the ends of which are fixed respectively to the fourth upright (105) and the fifth upright (107). The seventh arm (114) and the eighth arm (115) have the function of stiffening the frame (4).

It is understood that the above has been described by way of example and that any technical-functional variants of the proposed system are considered to fall within the protective scope of the present technical solution, as claimed in the following.

## Claims

1. A conveyor (1) having a belt (2) provided with at least a plurality of guide-synchronising elements (3) arranged in a longitudinal direction, comprising:
a frame (4);
a first driven winding group (5);
a motorised winding group (6) comprising a drive shaft (11) and at least a cogged pulley (12) which is fixed to the drive shaft (11) so as to enmesh with the at least a plurality of guide-synchronising elements (3);
the first driven winding group (5) comprises: a first pulleys support (7) which is borne by the frame (4), which is rotatable relative to the frame (4) and which comprises a first cylindrical lateral surface (8);
a first plurality of pulleys (9) which conforms at least a first circular seating (10) for receiving the at least a plurality of guide-synchronising elements (3) when the belt (2) winds on the first plurality of pulleys (9);
**characterised in that**:
the first plurality of pulleys (9) is dimensioned for being inserted along the first cylindrical lateral surface (8) of the first pulleys support (7) and are fixable to the first pulleys support (7);
the motorised winding group (6) further comprises: a second pulleys support (13) which has a tubular shape, which is inserted along the drive shaft (11), which is rotatable with respect to the drive shaft (11) and which comprises a second cylindrical lateral surface (14); a third pulleys support (15) which has a tubular shape, which is inserted along the drive shaft (11), which is rotatable with respect to the drive shaft (11) and which comprises a third cylindrical lateral surface (16);
at least a first pulley (39) which is dimensioned so as to insert along the second cylindrical lateral surface (14) of the second pulleys support (13) and which is fixable to the second pulleys support (13); at least a second pulley (40) which is dimensioned so as to insert along the third cylindrical lateral surface (16) of the third pulleys support (15) and which is fixable to the third pulleys support (15);
the second pulleys support (13) and the third pulleys support (15) being opposite with respect to the cogged pulley (12);
at least a part of the pulleys of the first plurality of pulleys (9), the at least a first pulley (39) and the at least a second pulley (40) being insertable and removable along and from, respectively, the first cylindrical lateral surface (8), the second cylindrical lateral surface (14) and the third cylindrical lateral surface (16) as a function of the transversal dimensions of the belt (2).

2. The conveyor (1) of the preceding claim, wherein the motorised winding group (6) and/or the first driven winding group (5) is arranged projectingly, thus having a free end.

3. The conveyor (1) according to claim 1 or 2, wherein the first driven winding group (5) comprises a first driven shaft (19) which is fixed to the frame (4), and wherein the first pulleys support (7) is rotatably coupled to the first driven shaft (19).

4. The conveyor (1) of any one of the preceding claims, comprising:
a second driven winding group (61) comprising in turn: a fourth pulleys support which is borne by the frame (4), which is rotatable with respect to the frame (4) and which comprises a fourth cylindrical lateral surface; a fourth plurality of pulleys (62) which are dimensioned for inserting along the fourth cylindrical lateral surface of the fourth pulleys support and which are fixable to the fourth pulleys support; the fourth plurality of pulleys (62) conforming at least a second circular seating (63) for receiving the at least a plurality of guide-synchronising elements (3) when the belt (2) winds on the fourth plurality of pulleys (62);
a third driven winding group (64) comprising in turn: a fifth pulleys support which is borne by the frame (4), which is rotatable with respect to the frame (4) and which comprises a fifth cylindrical lateral surface; a fifth plurality of pulleys (65) which are dimensioned for inserting along the fifth cylindrical lateral surface of the fifth pulleys support and which are fixable to the fifth pulleys support; the fifth plurality of pulleys (65) conforming at least a third circular seating (66) for receiving the at least a plurality of guide-synchronising elements (3) when the belt (2) winds on the fifth plurality of pulleys (65);
the belt (2) being wound on the first driven winding group (5), on the second driven winding group (61), on the third driven winding group (64) and on the motorised winding group (6) so as to convey the products while rotating them by a predetermined angle.

5. The conveyor (1) of the preceding claim, wherein the second driven winding group (61) and/or the third driven winding group (64) is arranged projectingly, thus having a free end.

6. The conveyor (1) of claim 4 or 5, comprising:
a first support and regulating unit (67), comprising: a first winding groups support (68) which is fixed to the frame (4); a first carriage (69) that can slide along the first winding groups support (68) and which bears the first driven winding group (5); a second carriage (70) that can slide along the first winding groups support (68) and which bears the motorised winding group (6); first fixing means (71) for removably fixing the first carriage (69) to the first winding groups support (68) at a first position; second fixing means (72) for removably fixing the second carriage (70) to the first winding groups support (68) at a second position; the first support and regulating unit (67) being suitable for supporting the first driven winding group (5) and the motorised winding group (6), for regulating the position of the first driven winding group (5) along the first winding groups support (68) and for regulating the position of the motorised winding group (6) along the first winding groups support (68);
a second support and regulating unit (73), comprising: a second winding groups support (74) which is fixed to the frame (4); a third carriage (75) that can slide along the second winding groups support (74) and which bears the second driven winding group (61); and a fourth carriage (76) that can slide along the second winding groups support (74) and which bears the third driven winding group (64); third fixing means (77) for removably fixing the third carriage (75) to the second winding groups support (74) at a third position; fourth fixing means (78) for removably fixing the fourth carriage (76) to the second winding groups support (74) at a fourth position; the second support and regulating unit (73) being suitable for supporting the second driven winding group (61) and the third driven winding group (64), for regulating the position of the second driven winding group (61) along the second winding groups support (74) and for regulating the position of the third driven winding group (64) along the second winding groups support (74).

7. The conveyor (1) of the preceding claim, comprising: a first rail (79) which is fixed to the first winding groups support (68) and a second rail (80) which is fixed to the second winding groups support (74); wherein the first carriage (69) is slidably coupled to the first rail (79), the second carriage (70) is slidably coupled to the first rail (79), the third carriage (75) is slidably coupled to the second rail (80) and the fourth carriage (76) is slidably coupled to the second rail (80).

8. The conveyor (1) of claim 6 or 7, wherein: the first winding groups support (68) develops longitudinally along a first axis (A1); the first carriage (69) and the second carriage (70) are slidable parallel to the first axis (A1); the second winding groups support (74) develops longitudinally along a second axis (A2); the third carriage (75) and the fourth carriage (76) are slidable parallel to the second axis (A2); the first winding groups support (68) and the second winding groups support (74) are vertically orientated; and the belt (2) is wound on the first driven winding group (5), on the second driven winding group (61), on the third driven winding group (64) and on the motorised winding group (6) so as to convey the products while orientating them by an angle that is substantially one hundred and eighty degrees.

9. The conveyor (1) of claim 6 or 7, wherein: the first winding groups support (68) develops longitudinally along a first axis (A1); the first carriage (69) and the second carriage (70) are slidable parallel to the first axis (A1); the second winding groups support (74) develops longitudinally along a second axis (A2); the third carriage (75) and the fourth carriage (76) are slidable parallel to the second axis (A2);
the first winding groups support (68) is vertically orientated;
it comprises an upright (81) which is removably fixed to the frame (4); the second winding groups support (74) is borne by the upright (81) in such a way as to be horizontally orientated; and the belt (2) is wound on the first driven winding group (5), on the second driven winding group (61), on the third driven winding group (64) and on the motorised winding group (6) so as to convey the products while orientating them by an angle that is substantially ninety degrees.

10. The conveyor (1) of any one of the preceding claims from 4 to 9, wherein the frame (4) is configured in such a way that the first winding groups support (68), the first driven winding group (5) and the motorised winding group (6), on one side, and the second winding groups support (74), the second driven winding group (61), and the third driven winding group (64), on the other side, can be reciprocally neared or distanced.

## Patentansprüche

1. Förderer (1) mit einem Band (2) mit zumindest einer Vielzahl von Führungs- und Synchronisationselementen (3), die in einer Längsrichtung angeordnet sind, umfassend:
einen Rahmen (4);
eine erste getriebene Wicklungsgruppe (5);
eine motorbetriebene Wicklungsgruppe (6), umfassend eine Antriebswelle (11) und zumindest eine Zahnscheibe (12), die an der Antriebswelle (11) befestigt ist, um mit der zumindest einen Vielzahl von Führungs- und Synchronisationselementen (3) in Eingriff zu treten;
wobei die erste getriebene Wicklungsgruppe (5) umfasst: einen ersten Riemenscheibenträger (7), der von dem Rahmen (4) getragen wird, der relativ zu dem Rahmen (4) drehbar ist und der eine erste zylindrische seitliche Oberfläche (8) umfasst;
eine erste Vielzahl von Riemenscheiben (9), die zumindest einen ersten kreisförmigen Sitz (10) zur Aufnahme der zumindest einen Vielzahl von Führungs- und Synchronisationselementen (3) bildet, wenn das Band (2) auf die erste Vielzahl von Riemenscheiben (9) gewickelt wird;
**dadurch gekennzeichnet, dass**:
die erste Vielzahl von Riemenscheiben (9) dafür bemessen ist, entlang der ersten zylindrischen seitlichen Oberfläche (8) des ersten Riemenscheibenträgers (7) eingeführt zu werden und an dem ersten Riemenscheibenträger (7) befestigbar ist;
wobei die motorbetriebene Wicklungsgruppe (6) ferner umfasst: einen röhrenförmigen zweiten Riemenscheibenträger (13), der entlang der Antriebswelle (11) eingeführt ist, der relativ zu der Antriebswelle (11) drehbar ist, und der eine zweite zylindrische seitliche Oberfläche (14) umfasst; einen röhrenförmigen dritten Riemenscheibenträger (15), der entlang der Antriebswelle (11) eingeführt ist, der relativ zu der Antriebswelle (11) drehbar ist, und der eine dritte zylindrische seitliche Oberfläche (16) umfasst;
wobei zumindest eine erste Riemenscheibe (39) dafür bemessen ist, entlang der zweiten zylindrischen seitlichen Oberfläche (14) des zweiten Riemenscheibenträgers (13) eingeführt zu werden, und an dem zweiten Riemenscheibenträger (13) befestigbar ist; und zumindest eine zweite Riemenscheibe (40) dafür bemessen ist, entlang der dritten zylindrischen seitlichen Oberfläche (16) des dritten Riemenscheibenträgers (15) eingeführt zu werden, und an dem dritten Riemenscheibenträger (15) befestigbar ist;
der zweite Riemenscheibenträger (13) und der dritte Riemenscheibenträger (15) bezogen auf die Zahnscheibe (12) einander gegenüberliegend sind;
wobei zumindest ein Teil der Riemenscheiben der ersten Vielzahl von Riemenscheiben (9), die zumindest eine erste Riemenscheibe (39) und die zumindest eine zweite Riemenscheibe (40), jeweils einführbar in und entnehmbar aus der ersten zylindrischen seitlichen Oberfläche (8), der zweiten zylindrischen seitlichen Oberfläche (14) beziehungsweise der dritten zylindrischen seitlichen Oberfläche (16) sind, jeweils in Abhängigkeit von den Querabmessungen des Bandes (2).

2. Förderer (1) nach dem vorhergehenden Anspruch, wobei die motorbetriebene Wicklungsgruppe (6) und/oder die erste getriebene Wicklungsgruppe (5) auskragend angeordnet ist und somit ein freies Ende aufweist.

3. Förderer (1) nach Anspruch 1 oder 2, wobei die erste getriebene Wicklungsgruppe (5) eine erste Abtriebswelle (19) umfasst, die an dem Rahmen (4) befestigt ist, und wobei der erste Riemenscheibenträger (7) drehbar an die erste Abtriebswelle (19) gekoppelt ist.

4. Förderer (1) nach einem der vorhergehenden Ansprüche, umfassend: eine zweite getriebene Wicklungsgruppe (61), wiederum umfassend:
einen vierten Riemenscheibenträger, der von dem Rahmen (4) getragen wird, der relativ zu dem Rahmen (4) drehbar ist, und der eine vierte zylindrische seitliche Oberfläche umfasst; eine vierte Vielzahl von Riemenscheiben (62), die dafür bemessen ist, entlang der vierten zylindrischen seitlichen Oberfläche des vierten Riemenscheibenträgers eingeführt zu werden und an dem vierten Riemenscheibenträger befestigbar ist; wobei die vierte Vielzahl von Riemenscheiben (62) zumindest einen zweiten kreisförmigen Sitz (63) zur Aufnahme der zumindest einen Vielzahl von Führungs- und Synchronisationselementen (3) bildet, wenn das Band (2) auf die vierte Vielzahl von Riemenscheiben (62) gewickelt wird;
eine dritte getriebene Wicklungsgruppe (64) wiederum umfassend: einen fünften Riemenscheibenträger, der von dem Rahmen (4) getragen wird, der relativ zu dem Rahmen (4) drehbar ist, und der eine fünfte zylindrische seitliche Oberfläche umfasst; eine fünfte Vielzahl von Riemenscheiben (65), die dafür bemessen ist, entlang der fünften zylindrischen seitlichen Oberfläche des fünften Riemenscheibenträgers eingeführt zu werden und an dem fünften Riemenscheibenträger befestigbar ist; wobei die fünfte Vielzahl von Riemenscheiben (65) zumindest einen dritten kreisförmigen Sitz (66) zur Aufnahme der zumindest einen Vielzahl von Führungs- und Synchronisationselementen (3) bildet, wenn das Band (2) auf die fünfte Vielzahl von Riemenscheiben (65) gewickelt wird;
wobei das Band (2) auf die erste getriebene Wicklungsgruppe (5), auf die zweite getriebene Wicklungsgruppe (61), auf die dritte getriebene Wicklungsgruppe (64) und auf die motorbetriebene Wicklungsgruppe (6) gewickelt wird, um die Produkte zu befördern und diese gleichzeitig um einen vorgegebenen Winkel zu drehen.

5. Förderer (1) nach dem vorhergehenden Anspruch, wobei die zweite getriebene Wicklungsgruppe (61) und/oder die dritte getriebene Wicklungsgruppe (64) auskragend angeordnet ist und somit ein freies Ende aufweist.

6. Förderer (1) nach Anspruch 4 oder 5, umfassend:
eine erste Träger- und Regulierungseinheit (67), umfassend: einen ersten Wicklungsgruppenträger (68), der an dem Rahmen (4) befestigt ist; einen ersten Wagen (69), der entlang dem ersten Wicklungsgruppenträger (68) gleiten kann und der die erste getriebene Wicklungsgruppe (5) trägt;
einen zweiten Wagen (70), der entlang dem ersten Wicklungsgruppenträger (68) gleiten kann und der die motorbetriebene Wicklungsgruppe (6) trägt; erste Befestigungsmittel (71) zur lösbaren Befestigung des ersten Wagens (69) an dem ersten Wicklungsgruppenträger (68) in einer ersten Position; zweite Befestigungsmittel (72) zur lösbaren Befestigung des zweiten Wagens (70) an dem ersten Wicklungsgruppenträger (68) in einer zweiten Position; wobei die erste Träger- und Regulierungseinheit (67) geeignet ist, die erste getriebene Wicklungsgruppe (5) und die motorbetriebene Wicklungsgruppe (6) zu tragen, die Position der ersten getriebenen Wicklungsgruppe (5) entlang dem ersten Wicklungsgruppenträger (68) zu regulieren und die Position der motorbetriebenen Wicklungsgruppe (6) entlang dem ersten Wicklungsgruppenträger (68) zu regulieren;
eine zweite Träger- und Regulierungseinheit (73), umfassend: einen zweiten Wicklungsgruppenträger (74), der an dem Rahmen (4) befestigt ist; einen dritten Wagen (75), der entlang dem zweiten Wicklungsgruppenträger (74) gleiten kann und der die zweite getriebene Wicklungsgruppe (61) trägt; und einen vierten Wagen (76), der entlang dem zweiten Wicklungsgruppenträger (74) gleiten kann und der die dritte getriebene Wicklungsgruppe (64) trägt; dritte Befestigungsmittel (77) zur lösbaren Befestigung des dritten Wagens (75) an dem zweiten Wicklungsgruppenträger (74) in einer dritten Position; vierte Befestigungsmittel (78) zur lösbaren Befestigung des vierten Wagens (76) an dem zweiten Wicklungsgruppenträger (74) in einer vierten Position; wobei die zweite Träger- und Regulierungseinheit (73) geeignet ist, die zweite getriebene Wicklungsgruppe (61) und die dritte getriebene Wicklungsgruppe (64) zu tragen, die Position der zweiten getriebenen Wicklungsgruppe (61) entlang dem zweiten Wicklungsgruppenträger (74) zu regulieren und die Position der dritten getriebenen Wicklungsgruppe (64) entlang dem zweiten Wicklungsgruppenträger (74) zu regulieren.

7. Förderer (1) nach dem vorhergehenden Anspruch, umfassend: eine erste Schiene (79), die an dem ersten Wicklungsgruppenträger (68) befestigt ist, und eine zweite Schiene (80), die an dem zweiten Wicklungsgruppenträger (74) befestigt ist; wobei der erste Wagen (69) gleitbar an die erste Schiene (79) gekoppelt ist, der zweite Wagen (70) gleitbar an die erste Schiene (79) gekoppelt ist, der dritte Wagen (75) gleitbar an die zweite Schiene (80) gekoppelt ist und der vierte Wagen (76) gleitbar an die zweite Schiene (80) gekoppelt ist.

8. Förderer (1) nach Anspruch 6 oder 7, wobei: der erste Wicklungsgruppenträger (68) sich in Längsrichtung entlang einer ersten Achse (A1) erstreckt; der erste Wagen (69) und der zweite Wagen (70) parallel zu der ersten Achse (A1) gleiten können; der zweite Wicklungsgruppenträger (74) sich in Längsrichtung entlang einer zweiten Achse (A2) erstreckt; der dritte Wagen (75) und der vierte Wagen (76) parallel zu der zweiten Achse (A2) gleiten können; der erste Wicklungsgruppenträger (68) und der zweite Wicklungsgruppenträger (74) vertikal ausgerichtet sind; und das Band (2) auf die erste getriebene Wicklungsgruppe (5), auf die zweite getriebene Wicklungsgruppe (61), auf die dritte getriebene Wicklungsgruppe (64) und auf die motorbetriebene Wicklungsgruppe (6) gewickelt wird, um die Produkte zu befördern und diese gleichzeitig um einen Winkel auszurichten, der im Wesentlichen einhundertachtzig Grad beträgt.

9. Förderer (1) nach Anspruch 6 oder 7, wobei: der erste Wicklungsgruppenträger (68) sich in Längsrichtung entlang einer ersten Achse (A1) erstreckt; der erste Wagen (69) und der zweite Wagen (70) parallel zu der ersten Achse (A1) gleiten können; der zweite Wicklungsgruppenträger (74) sich in Längsrichtung entlang einer zweiten Achse (A2) erstreckt; der dritte Wagen (75) und der vierte Wagen (76) parallel zu der zweiten Achse (A2) gleiten können;
der erste Wicklungsgruppenträger (68) vertikal ausgerichtet ist;
er einen Pfosten (81) umfasst, der lösbar an dem Rahmen (4) befestigt ist; der zweite Wicklungsgruppenträger (74) von dem Pfosten (81) derart getragen wird, dass er horizontal ausgerichtet ist; und das Band (2) auf die erste getriebene Wicklungsgruppe (5), auf die zweite getriebene Wicklungsgruppe (61), auf die dritte getriebene Wicklungsgruppe (64) und auf die motorbetriebene Wicklungsgruppe (6) gewickelt wird, um die Produkte zu befördern und diese gleichzeitig um einen Winkel auszurichten, der im Wesentlichen neunzig Grad beträgt.

10. Förderer (1) nach einem der vorhergehenden Ansprüche von 4 bis 9, wobei der Rahmen (4) dafür ausgelegt ist, dass der erste Wicklungsgruppenträger (68), die erste getriebene Wicklungsgruppe (5) und die motorbetriebene Wicklungsgruppe (6), auf einer Seite, und der zweite Wicklungsgruppenträger (74), die zweite getriebene Wicklungsgruppe (61), und die dritte getriebene Wicklungsgruppe (64), auf der anderen Seite, jeweils einander angenähert oder voneinander beabstandet werden können.

## Revendications

1. Un transporteur (1) comportant une courroie (2) pourvue d'au moins une pluralité d'éléments de guidage-synchronisation (3) disposés dans une direction longitudinale, comprenant :
un châssis (4) ;
un premier groupe d'enroulement mené (5) ;
un groupe d'enroulement motorisé (6) comprenant un arbre d'entraînement (11) et au moins une poulie dentée (12) qui est fixée à l'arbre d'entraînement (11) de manière à s'engrener avec ladite au moins une pluralité d'éléments de guidage-synchronisation (3) ;
le premier groupe d'enroulement mené (5) comprend : un premier support de poulies (7) qui est porté par le châssis (4), qui peut tourner par rapport au châssis (4) et qui comprend une première surface latérale cylindrique (8) ;
une première pluralité de poulies (9) qui conforme au moins un premier siège circulaire (10) pour recevoir ladite au moins une pluralité d'éléments de guidage-synchronisation (3) lorsque la courroie (2) s'enroule sur la première pluralité de poulies (9) ;
**caractérisé en ce que** :
la première pluralité de poulies (9) est dimensionnée pour être insérée le long de la première surface latérale cylindrique (8) du premier support de poulies (7) et peut être fixée au premier support de poulies (7) ;
le groupe d'enroulement motorisé (6) comprend en outre : un deuxième support de poulies (13) qui a une forme tubulaire, qui est inséré le long de l'arbre d'entraînement (11), qui peut tourner par rapport à l'arbre d'entraînement (11) et qui comprend une deuxième surface latérale cylindrique (14) ; un troisième support de poulies (15) qui a une forme tubulaire, qui est inséré le long de l'arbre d'entraînement (11), qui peut tourner par rapport à l'arbre d'entraînement (11) et qui comprend une troisième surface latérale cylindrique (16) ;
au moins une première poulie (39) qui est dimensionnée de manière à s'insérer le long de la deuxième surface latérale cylindrique (14) du deuxième support de poulies (13) et qui peut être fixée au deuxième support de poulies (13) ; au moins une deuxième poulie (40) qui est dimensionnée de manière à s'insérer le long de la troisième surface latérale cylindrique (16) du troisième support de poulies (15) et qui peut être fixée au troisième support de poulies (15) ;
le deuxième support de poulies (13) et le troisième support de poulies (15) étant opposés par rapport à la poulie dentée (12) ;
au moins une partie des poulies de la première pluralité de poulies (9), ladite au moins une première poulie (39) et ladite au moins une deuxième poulie (40) pouvant être insérées et retirées le long de et de, respectivement, la première surface latérale cylindrique (8), la deuxième surface latérale cylindrique (14) et la troisième surface latérale cylindrique (16) en fonction des dimensions transversales de la courroie (2).

2. Le transporteur (1) selon la revendication précédente, dans lequel le groupe d'enroulement motorisé (6) et/ou le premier groupe d'enroulement mené (5) est disposé en saillie, ayant ainsi une extrémité libre.

3. Le transporteur (1) selon la revendication 1 ou 2, dans lequel le premier groupe d'enroulement mené (5) comprend un premier arbre mené (19) qui est fixé au châssis (4), et dans lequel le premier support de poulies (7) est accouplé de façon rotative avec le premier arbre mené (19).

4. Le transporteur (1) selon l'une quelconque des revendications précédentes, comprenant :
un deuxième groupe d'enroulement mené (61) comprenant à son tour : un quatrième support de poulies qui est porté par le châssis (4), qui peut tourner par rapport au châssis (4) et qui comprend une quatrième surface latérale cylindrique ; une quatrième pluralité de poulies (62) qui sont dimensionnées pour s'insérer le long de la quatrième surface latérale cylindrique du quatrième support de poulies et qui peuvent être fixées au quatrième support de poulies ; la quatrième pluralité de poulies (62) conformant au moins un deuxième siège circulaire (63) pour recevoir ladite au moins une pluralité d'éléments de guidage-synchronisation (3) lorsque la courroie (2) s'enroule sur la quatrième pluralité de poulies (62) ;
un troisième groupe d'enroulement mené (64) comprenant à son tour : un cinquième support de poulies qui est porté par le châssis (4), qui peut tourner par rapport au châssis (4) et qui comprend une cinquième surface latérale cylindrique ; une cinquième pluralité de poulies (65) qui sont dimensionnées pour s'insérer le long de la cinquième surface latérale cylindrique du cinquième support de poulies et qui peuvent être fixées au cinquième support de poulies ; la cinquième pluralité de poulies (65) conformant au moins un troisième siège circulaire (66) pour recevoir ladite au moins une pluralité d'éléments de guidage-synchronisation (3) lorsque la courroie (2) s'enroule sur la cinquième pluralité de poulies (65) ;
la courroie (2) étant enroulée sur le premier groupe d'enroulement mené (5), sur le deuxième groupe d'enroulement mené (61), sur le troisième groupe d'enroulement mené (64) et sur le groupe d'enroulement motorisé (6) de manière à acheminer les produits tout en les tournant d'un angle prédéfini.

5. Le transporteur (1) selon la revendication précédente, dans lequel le deuxième groupe d'enroulement mené (61) et/ou le troisième groupe d'enroulement mené (64) est disposé en saillie, ayant ainsi une extrémité libre.

6. Le transporteur (1) selon la revendication 4 ou 5, comprenant :
une première unité de support et de réglage (67), comprenant : un premier support de groupes d'enroulement (68) qui est fixé au châssis (4) ; un premier chariot (69) qui peut coulisser le long du premier support de groupes d'enroulement (68) et qui porte le premier groupe d'enroulement mené (5) ; un deuxième chariot (70) qui peut coulisser le long du premier support de groupes d'enroulement (68) et qui porte le groupe d'enroulement motorisé (6) ; des premiers moyens de fixation (71) pour fixer de façon amovible le premier chariot (69) au premier support de groupes d'enroulement (68) au niveau d'une première position ; des deuxièmes moyens de fixation (72) pour fixer de façon amovible le deuxième chariot (70) au premier support de groupes d'enroulement (68) au niveau d'une deuxième position ; la première unité de support et de réglage (67) étant destinée à supporter le premier groupe d'enroulement mené (5) et le groupe d'enroulement motorisé (6), pour régler la position du premier groupe d'enroulement mené (5) le long du premier support de groupes d'enroulement (68) et pour régler la position du groupe d'enroulement motorisé (6) le long du premier support de groupes d'enroulement (68) ;
une deuxième unité de support et de réglage (73), comprenant : un deuxième support de groupes d'enroulement (74) qui est fixé au châssis (4) ; un troisième chariot (75) qui peut coulisser le long du deuxième support de groupes d'enroulement (74) et qui porte le deuxième groupe d'enroulement mené (61) ; et un quatrième chariot (76) qui peut coulisser le long du deuxième support de groupes d'enroulement (74) et qui porte le troisième groupe d'enroulement mené (64) ; des troisièmes moyens de fixation (77) pour fixer de façon amovible le troisième chariot (75) au deuxième support de groupes d'enroulement (74) au niveau d'une troisième position ; des quatrièmes moyens de fixation (78) pour fixer de façon amovible le quatrième chariot (76) au deuxième support de groupes d'enroulement (74) au niveau d'une quatrième position ; la deuxième unité de support et de réglage (73) étant destinée à supporter le deuxième groupe d'enroulement mené (61) et le troisième groupe d'enroulement mené (64), pour régler la position du deuxième groupe d'enroulement mené (61) le long du deuxième support de groupes d'enroulement (74) et pour régler la position du troisième groupe d'enroulement mené (64) le long du deuxième support de groupes d'enroulement (74).

7. Le transporteur (1) selon la revendication précédente, comprenant : un premier rail (79) qui est fixé au premier support de groupes d'enroulement (68) et un deuxième rail (80) qui est fixé au deuxième support de groupes d'enroulement (74) ; dans lequel le premier chariot (69) est accouplé de façon coulissante avec le premier rail (79), le deuxième chariot (70) est accouplé de façon coulissante avec le premier rail (79), le troisième chariot (75) est accouplé de façon coulissante avec le deuxième rail (80) et le quatrième chariot (76) est accouplé de façon coulissante avec le deuxième rail (80) .

8. Le transporteur (1) selon la revendication 6 ou 7, dans lequel : le premier support de groupes d'enroulement (68) se développe longitudinalement le long d'un premier axe (A1) ; le premier chariot (69) et le deuxième chariot (70) peuvent coulisser parallèlement au premier axe (A1) ; le deuxième support de groupes d'enroulement (74) se développe longitudinalement le long d'un deuxième axe (A2) ; le troisième chariot (75) et le quatrième chariot (76) peuvent coulisser parallèlement au deuxième axe (A2) ; le premier support de groupes d'enroulement (68) et le deuxième support de groupes d'enroulement (74) sont orientés verticalement ; et la courroie (2) est enroulée sur le premier groupe d'enroulement mené (5), sur le deuxième groupe d'enroulement mené (61), sur le troisième groupe d'enroulement mené (64) et sur le groupe d'enroulement motorisé (6) de manière à acheminer les produits tout en les orientant d'un angle qui est essentiellement de cent quatre-vingts degrés.

9. Le transporteur (1) selon la revendication 6 ou 7, dans lequel : le premier support de groupes d'enroulement (68) se développe longitudinalement le long d'un premier axe (A1) ; le premier chariot (69) et le deuxième chariot (70) peuvent coulisser parallèlement au premier axe (A1) ; le deuxième support de groupes d'enroulement (74) se développe longitudinalement le long d'un deuxième axe (A2) ; le troisième chariot (75) et le quatrième chariot (76) peuvent coulisser parallèlement au deuxième axe (A2) ;
le premier support de groupes d'enroulement (68) est orienté verticalement ;
il comprend un montant (81) qui est fixé de façon amovible au châssis (4) ; le deuxième support de groupes d'enroulement (74) est porté par le montant (81) de manière à être orienté horizontalement ; et la courroie (2) est enroulée sur le premier groupe d'enroulement mené (5), sur le deuxième groupe d'enroulement mené (61), sur le troisième groupe d'enroulement mené (64) et sur le groupe d'enroulement motorisé (6) de manière à acheminer les produits tout en les orientant d'un angle qui est essentiellement de quatre-vingt-dix degrés.

10. Le transporteur (1) selon l'une quelconque des revendications précédentes de 4 à 9, dans lequel le châssis (4) est configuré de manière à ce que le premier support de groupes d'enroulement (68), le premier groupe d'enroulement mené (5) et le groupe d'enroulement motorisé (6), d'un côté, et le deuxième support de groupes d'enroulement (74), le deuxième groupe d'enroulement mené (61), et le troisième groupe d'enroulement mené (64), de l'autre côté, puissent être réciproquement rapprochés ou éloignés.
